# EUROPÄISCHE PATENTSCHRIFT

(11) **EP 3 124 150 B1**
(45) Veröffentlichungstag und Bekanntmachung des Hinweises auf die Patenterteilung: **02.09.2020**
(21) Anmeldenummer: 16181456.1
(22) Anmeldetag: 27.07.2016
(51) Int. Cl.: B23B 31/11, B23C 5/10, B25B 13/08

(54) **ROTIERBARES ZERSPAN-WERKZEUG**
ROTATABLE MACHINING TOOL
OUTIL D'ENLEVEMENT DE COPEAUX ROTATIF

(30) Priorität: 29.07.2015 DE 102015214434
(43) Veröffentlichungstag der Anmeldung: 01.02.2017
(73) Patentinhaber: Franz Haimer Maschinenbau KG, 86568 Hollenbach-Igenhausen (DE)
(72) Erfinder: Haimer, Franz, 86568 Igenhausen (DE)
(74) Vertreter: Ruttensperger Lachnit Trossin Gomoll

(56) Entgegenhaltungen:
- EP-A2- 0 425 883
- DE-C- 231 581
- FR-A1- 2 814 101
- JP-U- S56 171 165
- US-A- 5 953 968
- US-A- 6 082 228
- US-A1- 2004 016 323
- US-A1- 2006 072 977

## Beschreibung

Die vorliegende Anmeldung betrifft ein rotierbares Zerspan-Werkzeug, insbesondere Werkzeugkopf, wie etwa Fräs-, Schleif- oder Bohrkopf, gemäß dem Oberbegriff des Anspruchs 1 bzw. gemäß dem Oberbegriff des Anspruchs 2.

Ein gattungsgemäßes Beispiel eines solchen rotierbaren Zerspan-Werkzeugs ist aus der US 2006/0072977 A1 bekannt. Es weist hexagonale Schlüsselangriffsflächen-Formationen auf, wie sie von einem Sechskant-Schraubenkopf bekannt sind.

Rotierbare Zerspan-Werkzeuge sind allgemein bekannt. Sie werden in Fachkreisen auch als "Werkzeugköpfe" oder als "Einschraubköpfe" bezeichnet.

Die hinter den gattungsgemäßen Zerspan-Werkzeugen stehende Idee ist, dass bei der bestimmungsgemäßen Verwendung eines Zerspan-Werkzeugs im Wesentlichen nur die Zerspan-Formation, also etwa die Schneiden, verschlissen wird, während die übrigen Bauteilabschnitte des Zerspan-Werkzeugs unabhängig vom Verschleiß der Zerspan-Formation betriebsbereit bleiben. Daher wurden Zerspan-Werkzeuge geschaffen, bei welchen die verschlissene Zerspan-Formation gegen eine unverschlissene ausgetauscht werden kann, wobei das wenigstens eine verbleibende, das Zerspan-Werkzeug tragende Bauteil weiter verwendet werden kann. Ein solches das Zerspan-Werkzeug tragendes Bauteil kann ein Schaftbauteil sein, in das das Zerspan-Werkzeug mit seiner Schraubverbindungs-Formation eingedreht werden kann. Das Schaftbauteil kann beispielsweise mit einem vom Zerspan-Werkzeug verschiedenen Schaftdurchmesser passend für Werkzeugaufnahmen gestaltet sein. Das das Zerspan-Werkzeug tragende Bauteil kann auch eine Werkzeugaufnahme oder ein Spannfutter selbst sein, in das das Zerspan-Werkzeug der vorliegenden Erfindung ohne Zwischenanordnung eines Schaftbauteils unmittelbar eingedreht sein kann. Die gattungsgemäßen Zerspan-Werkzeuge kommen an rotierenden Werkzeugmaschinen, etwa an Bohr- oder Fräsmaschinen, zum Einsatz.

Ein weiteres rotierbares Zerspan-Werkzeug ist beispielsweise aus der WO 2014/026975 A1 der Anmelderin bekannt.

Zerspan-Werkzeuge werden üblicherweise mit eigens dafür gestalteten Schlüsseln, insbesondere Drehmomentschlüsseln, in das das Zerspan-Werkzeug tragende Bauteil eingedreht. Diese Schlüssel weisen hierzu eine Maulschlüssel-Formation auf, in welche die Schlüsselangriffsflächen-Formationen des Zerspan-Werkzeugs längs einer Einführachse einführbar sind. Das gattungsgemäße Zerspanwerkzeug kann mit einem herkömmlichen Maulschlüssel für Sechskant-Schrauben ein- und wieder ausgedreht werden.

Im Stand der Technik sind sowohl die Schlüsselangriffsflächen-Formationen am rotierbaren Zerspan-Werkzeug wie auch die Schlüsselflächenbereiche an der Maulschlüssel-Formation durch genau zwei parallele ebene Anlageflächen gebildet, welche im Falle der Schlüsselangriffsflächen-Formationen parallel zur Werkzeugachse orientiert und spiegelsymmetrisch zu einer Ebene, die parallel zu den Anlageflächen verläuft, angeordnet sind. Entsprechendes gilt selbstverständlich auch für die Schlüsselflächenbereiche der Maulschlüssel-Formation, für die die Werkzeugachse als Bezugsachse jedoch nur dann zur Verfügung steht, wenn sich die Maulschlüssel-Formation im Anlageeingriff mit dem Zerspan-Werkzeug befindet.

Diese bekannte Ausbildung von werkzeugseitigen Schlüsselangriffsflächen-Formationen und von schlüsselseitigen Schlüsselflächenbereichen als lediglich parallele ebene Anlageflächen beim Einführen des Zerspan-Werkzeugs in die Maulschlüssel-Formation führt - mitunter wegen der geringen Toleranzen zwischen Nenn-Maulweite und Nenn-Abstand der Schlüsselangriffsflächen-Formationen - zu langwierigen und Geduld erfordernden Einfädelvorgängen, bis schließlich Drehmoment von der Maulschlüssel-Formation auf das rotierbare Zerspan-Werkzeug übertragen werden kann.

Es ist daher Aufgabe der vorliegenden Erfindung, eine technische Lehre anzugeben, die es gestattet, gattungsgemäße Zerspan-Werkzeuge ohne aufwendige Einführ- bzw. Einfädeltätigkeit in Anlageeingriff mit einem zugeordneten Schlüssel bringen zu können und die es weiter ermöglicht, dass nach Herstellung des Anlageeingriffs die Einleitung von Drehmoment in das Zerspan-Werkzeug über einen flächigen Kontakt von werkzeugseitigen Schlüsselangriffsflächenbereichen und schlüsselseitigen Schlüsselflächenbereichen erfolgt, sodass eine im Stand der Technik häufig bei der Drehmomenteinleitung in Zerspan-Werkzeuge zu beobachtende Kantenbelastung der Schlüsselangriffsflächenbereiche reduziert oder sogar vollständig vermieden wird.

Aus der US 3,242,775 A ist ein Maulschlüssel für Sechskant-Schrauben bekannt, bei welchem jede Backe genau drei Schlüsselflächenbereiche aufweist, die in Einführrichtung aufeinander folgen. Die mittleren Schlüsselflächenbereiche verlaufen dabei parallel zur Einführachse, die maulöffnungsnäheren Schlüsselflächenbereiche und die maulöffnungsferneren Schlüsselflächenbereiche sind bezüglich des mittleren Schlüsselflächenbereichs jeweils - aber in unterschiedlichen Richtungen - um etwa 6,5° geneigt. Die einander unmittelbar gegenüberliegenden maulöffnungsnäheren Schlüsselflächenbereiche der beiden Backen verlaufen in Einführrichtung aufeinander zu, die maulöffnungsferneren geneigten Schlüsselflächenbereiche dagegen verlaufen in Einführrichtung voneinander weg.

Mit dieser Maulschlüssel-Formation wird beabsichtigt, unabhängig davon, wie die Abmessungen eines konkret einzudrehenden Sechskant-Schraubenkopfes und des dafür konkret zu verwendenden Maulschlüssels innerhalb der jeweils zulässigen Toleranzen ausfallen, dafür zu sorgen, dass das Drehmoment tatsächlich in die Schlüsselangriffsflächenbereiche des Sechskant-Schraubenkopfes und nicht in dessen Kanten eingeleitet wird. Dies führt in der Praxis dazu, dass abhängig davon, wie die genannten Abmessungen innerhalb der zulässigen Toleranzen ausfallen, entweder die mittleren parallelen ebenen Schlüsselflächenbereiche oder diesen benachbarte geneigte Schlüsselflächenbereiche Drehmoment in einen Sechskant-Schraubenkopf einleiten, abhängig von der gewählten Drehrichtung.

Aus der DE 23 15 81 B ist ein Maulschlüssel bekannt, bei welchem jede Backe genau zwei Schlüsselflächenbereiche aufweist, die relativ zueinander derart geneigt sind, dass sie einen zur jeweils anderen Backe vorstehenden Scheitel bilden, wobei der maulöffnungsnähere Schlüsselflächenbereich der einen Backe zu dem maulöffnungsferneren Schlüsselflächenbereich der jeweils anderen, gegenüberliegenden Backe parallel ist und umgekehrt.

Die Schlüsselflächenbereiche der Backen dieses bekannten Maulschlüssels weisen einen verhältnismäßig großen Neigungswinkel relativ zueinander auf, da es Ziel der hinter dieser Konstruktion steckenden technischen Lehre ist, den Maulschlüssel entgegen der Drehrichtung der Drehmomenteinleitung zurückdrehen zu können, ohne hierbei die Schraube mit Sechskant-Schraubenkopf abschnittsweise wieder lösen zu müssen, um den Maulschlüssel an etwaigen Hindernissen vorbei vom Schraubenkopf entgegen der Einführrichtung abziehen zu können.

Da die aus der DE 23 15 81 B bekannte Maulschlüssel-Formation orthogonal zur Einführachse in ihrer Erstreckungsebene eine Abmessung aufweist, welche insgesamt etwa das Doppelte der lichten Maulweite beträgt, um für eine Drehmomenteinleitung eine ausreichende Steifigkeit bereitzustellen, müssen die Schlüsselflächenbereiche der jeweiligen Backen einen verhältnismäßig großen Neigungswinkel aufweisen, um die Maulschlüssel-Formation mit ihrer gesamten Abmessung an einem entsprechenden Hindernis vorbei sicher entgegen der Einführrichtung von einem Sechskant-Schraubenkopf abziehen zu können.

Weitere Maulschlüssel sind aus der EP 0425883 A2 und aus der US 6082228 A bekannt.

Die vorliegend genannten Druckschriften betreffend Schlüssel des Standes der Technik weisen jedoch keinerlei Bezug zu einem Ein- oder Ausschrauben von Zerspan-Werkzeugen in sie tragende Bauteile auf, sondern sind ausschließlich auf ein Zusammenwirken mit üblichen Sechskant-Schraubenköpfen bezogen. Dabei gilt zu beachten, dass Sechskant-Schrauben als Massenware und die für ihre Betätigung verwendeten Maulschlüssel wesentlich großzügigeren Maßtoleranzen unterliegen als die hochpräzisen Zerspan-Werkzeuge und deren zugeordnete Schlüssel. Mit den großzügigeren Maßtoleranzen ergeben sich völlig andere Eingriffs- und Kräfteverhältnisse bei der Drehmomenteinleitung in Sechskant-Schrauben als in Schlüsselangriffsflächen-Formationen von Zerspan-Werkzeugen.

Die oben genannte Aufgabe wird gemäß einem ersten Gesichtspunkt der vorliegenden Erfindung gelöst durch ein rotierbares Zerspan-Werkzeug mit allen Merkmalen des Anspruchs 1. Die oben genannte Aufgabe wird gemäß einem zweiten Gesichtspunkt der vorliegenden Erfindung gelöst durch ein rotierbares Zerspan-Werkzeug mit allen Merkmalen des Anspruchs 2. An einer erfindungsgemäßen Ausführungsform eines Zerspanwerkzeugs weist jede der Schlüsselangriffsflächen-Formationen zwei in Umfangsrichtung um die Werkzeugachse mit Abstand voneinander vorgesehene Schlüsselangriffsflächenbereiche auf, welche derart voneinander weg geneigt sind, dass sie einen von der Werkzeugachse weg vorstehenden Scheitel bilden.

Der Scheitel ist gemäß dem zweiten Gesichtspunkt ein spitzer Scheitel, wenn etwa die relativ zueinander geneigten Schlüsselangriffsflächenbereiche unmittelbar aneinander angrenzen. Der Scheitel ist gemäß dem ersten Gesichtspunkt abgeplattet, etwa wenn zwischen den relativ zueinander geneigten Schlüsselangriffsflächenbereichen ein Zwischenflächenbereich vorgesehen ist. Der abgeplattete Scheitel ist in Umfangsrichtung um die Werkzeugachse länger als der spitze Scheitel, steht aber in radialer Richtung weniger weit von der Werkzeugachse vor, was das Aufschieben eines Schlüssels auf die Schlüsselangriffsflächen-Formation erleichtern kann.

Die Werkzeugachse ist dabei die Rotationsachse, um welche das Zerspan-Werkzeug betriebs- und bestimmungsgemäß im Zerspanbetrieb rotiert.

Durch die in der genannten Art und Weise geneigte Ausbildung von Schlüsselangriffsflächenbereichen in den beiden Schlüsselangriffsflächen-Formationen sind die Schlüsselangriffsflächen-Formationen bei Betrachtung von radial außen in Umfangsrichtung um die Werkzeugachse konvex - in der Regel bevorzugt polyedrisch-konvex - sodass der Abstand von zwei über eine Aufschubachse hinweg gegenüberliegenden Schlüsselangriffsflächenbereichen an ihrem scheitelfernen Ende geringer sein kann als an ihrem scheitelnäheren Ende. Somit können diese Schlüsselangriffsflächenbereiche eine Aufschubhilfe für einen Schlüssel bilden und das im Stand der Technik beim Aufschieben eines eng tolerierten Schlüssels auf Schlüsselangriffsflächen-Formationen häufig erforderliche "Einfädeln" vermindern oder sogar vermeiden.

Die "Aufschubachse" ist dabei jene theoretische Bewegungsbahn, längs welcher eine Maulschlüssel-Formation eines Schlüssels zur Vorbereitung einer Drehmomenteinleitung auf die Schlüsselangriffsflächen-Formationen des Zerspan-Werkzeugs aufgeschoben wird. Sie verläuft orthogonal zur Werkzeugachse des Zerspan-Werkzeugs, auf das die Maulschlüssel-Formation aufgeschoben wird. Sie liegt in der Erstreckungsebene der in der Regel ebenen Maulschlüssel-Formation. Die Aufschubachse und die oben genannte Einführachse entsprechen einander und sind lediglich auf einen unterschiedlichen Koordinatenursprung bezogen, die Aufschubachse auf das Zerspan-Werkzeug und die Einführachse auf die Maulschlüssel-Formation.

Darüber hinaus kann mit der wenigstens einen erfindungsgemäßen Schlüsselangriffsflächen-Formation mit voneinander weg angewinkelten Schlüsselangriffsflächenbereichen auch gewährleistet werden, dass ein Anlageeingriff zwischen einer Schlüsselfläche eines Schlüssels und einem Schlüsselangriffsflächenbereich des Zerspan-Werkzeugs als flächige Anlage erfolgt und Drehmoment nicht etwa über eine Kante der wenigstens einen Schlüsselangriffsflächen-Formation eingeleitet wird. Bei den Schlüsselangriffsflächen-Formationen des Standes der Technik, die lediglich zwei entgegengesetzte sowohl zueinander als auch zur Werkzeugachse parallele Schlüsselangriffsflächen aufweisen, ist eine Drehmomenteinleitung über die Kanten der Schlüsselangriffsflächen-Formationen - gemeint sind hier deren die Schlüsselangriffsflächen-Formationen in Umfangsrichtung abschließende Ränder - eher der Regelfall. Denn die Maulschlüssel-Formation des Schlüssels muss in ihrer Maulweite mit einem gewissen Mindestübermaß gegenüber dem Abstand der Schlüsselangriffsflächen bereitgestellt werden, um ein Aufschieben der Maulschlüssel-Formation auf die Schlüsselangriffsflächen-Formationen überhaupt zu ermöglichen. Wird die Maulschlüssel-Formation nach dem Aufschieben der Schlüsselangriffsflächen-Formationen des Standes der Technik dann um die Werkzeugachse gedreht, kommt es in der Regel zu einem Anliegen der Backen der Maulschlüssel-Formation ausschließlich an den Kanten der Schlüsselangriffsflächen-Formationen.

Anders liegt der Fall bei dem erfindungsgemäßen Zerspan-Werkzeug, bei welchem die beschriebene Neigung von orthogonal über die Aufschubachse hinweg einander gegenüberliegenden Schlüsselangriffsflächenbereichen eine Art Einführ- bzw. Aufschubschräge bildet, die das Aufschieben eines Schlüssels erleichtert. Dadurch kann die Maulweite einer für ein Ein- oder Ausdrehen eines vorgegebenen Zerspan-Werkzeugs erforderlichen Maulschlüssel-Formation mit geringeren Toleranzen bereitgestellt werden als dies im Stand der Technik der Fall ist, was zu einem vorteilhaften flächigen Anliegen von Schlüsselflächen an Schlüsselangriffsflächenbereichen führt. Dies wiederum führt zu einer erheblich verminderten Hertz'schen Pressung an den an der Drehmomenteinleitung beteiligten Bauteilabschnitten, sodass bei ansonsten gleicher Bauteilgestaltung wie im Stand der Technik in ein erfindungsgemäßes Zerspan-Werkzeug ein erhöhtes Drehmoment eingeleitet werden kann.

Die Werkzeugachse/Rotationsachse des Zerspan-Werkzeugs definiert dabei eine axiale Richtung. Sofern in der vorliegenden Anmeldung keine abweichende Definition angegeben ist, ist mit "radial" eine Richtung orthogonal zur Werkzeugachse auf diese zu bzw. von dieser weg bezeichnet und ist mit "Umfangsrichtung" eine um die Werkzeugachse umlaufende Richtung bezeichnet. Die Werkzeugachse bildet somit den Ursprung eines Zylinderkoordinatensystems.

Um zu vermeiden, dass bei der Einleitung von Drehmoment in die Schlüsselangriffsflächenbereiche eine unerwünschte Axialkraft auf das Zerspan-Werkzeug ausgeübt wird, ist es vorteilhaft, wenn eine Neigeachse, um welche zwei in Umfangsrichtung um die Werkzeugachse benachbarte Schlüsselangriffsflächenbereiche einer Schlüsselangriffsflächen-Formation relativ zueinander geneigt sind, parallel zur Werkzeugachse ist.

Grundsätzlich ist es denkbar, einen Schlüsselangriffsflächenbereich in axialer Richtung gekrümmt auszubilden, wenngleich dies dann nicht bevorzugt ist, wenn die Schlüsselflächenbereiche des mit dem Zerspan-Werkzeug zusammenwirkenden Schlüssels eben sind. In diesem Falle würde die Verwendung von in axialer Richtung balligen oder gekrümmten Schlüsselangriffsflächenbereichen die mögliche Kontaktfläche zwischen Schlüssel und Zerspan-Werkzeug für eine Drehmomenteinleitung erheblich verringern und damit verbunden eine bei der Drehmomenteinleitung auftretende Hertz'sche Pressung unerwünscht erhöhen. Aus diesem Grunde ist es zur Bereitstellung einer möglichst großen Kontaktfläche bevorzugt, wenn wenigstens ein Schlüsselangriffsflächenbereich einer Schlüsselangriffsflächen-Formation eben ist. Aus Symmetriegründen sind bevorzugt alle Schlüsselflächenbereiche einer Schlüsselangriffsflächen-Formation, bevorzugt beider Schlüsselangriffsflächen-Formationen eben, sodass der Werkzeugeingriff eines Schlüssels mit dem rotierbaren Zerspan-Werkzeug für alle möglichen Rotationsrelativstellungen zwischen Zerspan-Werkzeug und Schlüssel gleich ist.

Im Falle der bevorzugten ebenen Ausbildung der Schlüsselangriffsflächenbereiche kann eine bei der Drehmomenteinleitung unerwünschterweise auftretende Axialkraft dadurch vermieden werden, dass wenigstens ein ebener Schlüsselangriffsflächenbereich, vorzugsweise dass alle ebenen Schlüsselangriffsflächenbereiche parallel zur Werkzeugachse angeordnet sind.

Um zur Bildung der Schlüsselangriffsflächen-Formationen am Zerspan-Werkzeug möglichst wenig Material von diesem abtragen zu müssen und damit die Struktur des Zerspan-Werkzeugs möglichst wenig zu schwächen, ist erfindungsgemäß vorgesehen, dass die in Umfangsrichtung benachbarten bzw. unmittelbar benachbarten Schlüsselangriffsflächenbereiche einer Schlüsselangriffsflächen-Formation nur geringfügig relativ zueinander geneigt sind, nämlich dass ihre Normalenvektoren einen Winkel von nicht mehr als 15° einschließen. Tatsächlich hat sich in Versuchen gezeigt, dass bereits geringe Neigungswinkel sowohl ein Aufschieben einer Maulschlüssel-Formation auf die Schlüsselangriffsflächen-Formationen des Zerspan-Werkzeugs erleichtern als auch eine möglichst flächige Anlage eines Schlüsselflächenbereichs an einem Schlüsselangriffsflächenbereich bei Drehmomenteinleitung ermöglichen, sodass die zwischen Normalenvektoren von in Umfangsrichtung benachbarten bzw. unmittelbar benachbarten Schlüsselangriffsflächenbereichen eingeschlossenen Winkel bevorzugt nicht mehr als 10°, stärker bevorzugt nicht mehr als 7,5° und besonders bevorzugt sogar nicht mehr als 5° betragen müssen, um den gewünschten technischen Effekt einer Einfädelerleichterung einerseits und einer möglichst flächigen Krafteinleitung zwischen Schlüsselflächenbereichen und daran anliegenden Schlüsselangriffsflächenbereichen zu erzielen. Bevorzugt sind alle Neigungswinkel an Schlüsselangriffsflächen-Formationen eines Zerspan-Werkzeugs gleich groß.

Um zu erreichen, dass es beim Aufschieben des Schlüssels auf die Schlüsselangriffsflächen-Formationen des Zerspan-Werkzeugs auf die Orientierung des Zerspan-Werkzeugs in Umfangsrichtung möglichst nicht ankommt, ist gemäß einer bevorzugten Weiterbildung der vorliegenden Erfindung vorgesehen, dass das Zerspan-Werkzeug zwei Schlüsselangriffsflächen-Formationen aufweist, welche bezüglich einer die Werkzeugachse enthaltenden Symmetrieebene spiegelsymmetrisch sind oder/und welche bezüglich der Werkzeugachse als Symmetrieachse rotationssymmetrisch sind. In dem bezeichneten Fall der Spiegelsymmetrie liegt die oben genannte Aufschubachse in der Spiegelsymmetrieebene. Aufschubachse und die zu ihr in der Regel orthogonale Werkzeugachse spannen dann die Spiegelsymmetrieebene auf.

Sowohl die genannte Spiegelsymmetrie wie auch die genannte Rotationssymmetrie gestatten überdies, dass die Schlüsselangriffsflächenbereiche einer Schlüsselangriffsflächen-Formation in Umfangsrichtung unterschiedlich lang ausgebildet sein können, falls dies gewünscht ist. So können im Falle der Spiegelsymmetrie die Scheitel der Schlüsselangriffsflächen-Formationen orthogonal zur Aufschubachse einander gegenüberliegen, im Falle der Rotationssymmetrie können die Scheitel auf einer die Werkzeugachse schneidenden Durchmesserlinie liegen, welche einen von 90° verschiedenen Winkel mit der Aufschubachse einschließen kann.

Zur möglichst gleichmäßigen Einleitung eines Drehmoments in das Zerspan-Werkzeug über wenigstens zwei Schlüsselangriffsflächenbereiche ist vorteilhafterweise vorgesehen, dass wenigstens ein Schlüsselangriffsflächenbereich einer Schlüsselangriffsflächen-Formation parallel zu einem Schlüsselangriffsflächenbereich einer anderen Schlüsselangriffsflächen-Formation ist. Wenn es bei der Drehmomenteinleitung auf die Orientierung des Zerspan-Werkzeugs in Umfangsrichtung nicht ankommen soll, etwa wenn ein Schlüssel von entgegengesetzten Seiten auf die Schlüsselangriffsflächen-Formation aufschiebbar sein soll, ist es vorteilhaft, wenn jeder Schlüsselangriffsflächenbereich einer Schlüsselangriffsflächen-Formation parallel zu einem Schlüsselangriffsflächenbereich der anderen Schlüsselangriffsflächen-Formation ist. Dabei ist genauer vorteilhaft vorgesehen, dass zueinander parallele Schlüsselangriffsflächenbereiche unterschiedlicher Schlüsselangriffsflächen-Formationen in einander diametral gegenüberliegenden Umfangsbereichen des Zerspan-Werkzeugs gelegen sind, sodass ein Drehmoment möglichst gleichmäßig über wenigstens zwei im Wesentlichen diametral einander gegenüberliegende Schlüsselangriffsflächenbereiche in das Zerspan-Werkzeug eingeleitet werden kann. Der Abstand zweier paralleler Schlüsselangriffsflächenbereiche voneinander bestimmt dann die für eine Drehmomenteinleitung in diese Schlüsselangriffsflächenbereiche benötigte Maul- oder Schlüsselweite. Auch hier gilt: aufgrund der relativ zueinander geneigten Anordnung der Schlüsselangriffsflächenbereiche der Schlüsselangriffsflächen-Formationen kann eine Maulschlüssel-Formation mit der benötigten Maul- oder Schlüsselweite verglichen mit dem Stand der Technik mit geringerer Maßtoleranz bereitgestellt und trotzdem einfach auf die Schüsselangriffsflächen-Formationen mit den geneigten Schlüsselangriffsflächenbereichen aufgeschoben werden, ohne dass hierfür trotz der engeren Maßtoleranzen ein unerwünschter Einfädelaufwand notwendig wäre. Die Folge der engeren Toleranzen ist wiederum eine vorteilhaft flächige Anlage von Schlüsselflächenbereichen und Schlüsselangriffsflächenbereichen aneinander bei der Drehmomenteinleitung mit den oben bereits beschriebenen Wirkungen.

Grundsätzlich ist denkbar, an dem Zerspan-Werkzeug eine Vielzahl von Schlüsselangriffsflächen-Formationen vorzusehen. Tatsächlich reichen jedoch genau zwei einander gegenüberliegende Schlüsselangriffsflächen-Formationen zur Drehmomenteinleitung in das Zerspan-Werkzeug aus. Zur Minimierung des Fertigungsaufwands weist ein Zerspan-Werkzeug daher bevorzugt genau zwei Schlüsselangriffsflächen-Formationen auf.

Bevorzugt ist der Umfangsbereich zwischen den genau zwei Schlüsselangriffsflächen-Formationen frei von einer Schlüsselangriffsfläche und weist dort besonders bevorzugt einen Teilzylinderabschnitt auf. Die meisten Zerspan-Werkzeuge sind aus einem Zylinder, etwa aus Hartmetall und dergleichen, als Grundkörper gefertigt, sodass zur Ausbildung der Schlüsselangriffsflächen-Formationen nur die diese später tragenden Umfangsbereiche des zylindrischen Grundkörpers bearbeitet zu werden brauchen, während die in Umfangsrichtung zwischen den Schlüsselangriffsflächen-Formationen gelegenen Zerspan-Werkzeugbereiche ihre ursprüngliche teilzylindrische Gestalt beibehalten können. Dies verringert den zur Herstellung des Zerspan-Werkzeugs erforderlichen Fertigungsaufwand.

Ebenso kann eine Schlüsselangriffsflächen-Formation grundsätzlich eine beliebige Anzahl an Schlüsselangriffsflächenbereichen aufweisen, von welchen jeweils zwei in Umfangsrichtung benachbarte bzw. unmittelbar benachbarte Schlüsselangriffsflächenbereiche relativ zueinander um einen Neigewinkel geneigt sind. Da der zur Ausbildung einer Schlüsselangriffsflächen-Formation vorhandene Raum an einem Zerspan-Werkzeug begrenzt ist, werden die einzelnen Schlüsselangriffsflächenbereiche ein und derselben Schlüsselangriffsflächen-Formation mit zunehmender Anzahl in Umfangsrichtung kürzer. Um für einen Angriff eines Schlüssels eine ausreichend große Fläche bereitzustellen, ist es daher bevorzugt, wenn jede Schlüsselangriffsflächen-Formation genau zwei relativ zueinander geneigte Schlüsselangriffsflächenbereiche aufweist. Das so gebildete Zerspan-Werkzeug mit den wie oben beschrieben ausgebildeten Schlüsselangriffsflächen-Formationen kann mit einem herkömmlichen Schlüssel für Zerspan-Werkzeuge betätigt werden, also mit einem Schlüssel mit einer Maulschlüssel-Formation, deren gegenüberliegende Backen jeweils lediglich eine ebene Schlüsselfläche aufweisen, wobei die beiden vorhandenen Schlüsselflächen sowohl zueinander parallel als auch zu einer Erstreckungsebene der Maulschlüssel-Formation orthogonal sind.

Nachfolgend wird, außerhalb der vorliegenden Erfindung liegend, eine Maulschlüssel-Formation beschrieben. An einem solchen Maulschlüssel ist der Neigungswinkel zwischen den zwei Schlüsselflächenbereichen einer jeden Backe kleiner als oder gleich 10°, vorzugsweise kleiner als oder gleich 7,5°, besonders bevorzugt kleiner als oder gleich 5° ist.

Eine solche Maulschlüssel-Formation kann mit herkömmlichen Zerspan-Werkzeugen mit lediglich genau zwei ebenen, einander gegenüberliegenden sowohl zueinander als auch zur Werkzeugachse parallelen Schlüsselangriffsflächenbereichen verwendet werden oder kann mit einem erfindungsgemäßen Zerspan-Werkzeug verwendet werden, wie es oben beschrieben ist.

Durch die vorteilhaften geringen Neigungswinkel, wie sie oben genannt sind, wird einerseits ein Einführen der Schlüsselangriffsflächen-Formationen eines Zerspan-Werkzeugs in die Maulschlüssel-Formation erleichtert. Überdies wird eine flächige Anlage von Schlüsselflächenbereichen an Schlüsselangriffsflächenbereichen am Zerspan-Werkzeug gefördert, sodass eine unerwünschte Linien- oder gar Punktlast bei Drehmomenteinleitung, insbesondere in einem kantennahen Bereich an einem Umfangsrand eines Schlüsselangriffsflächenbereichs, vermieden werden kann. Schließlich wird durch die kleinen Neigungswinkel eine Totbewegung bei Drehrichtungsumkehr zwischen zwei Anlageeingriffen von Schlüsselflächenbereichen und Schlüsselangriffsflächenbereichen kleingehalten.

Die Erleichterung des Einführens eines Zerspan-Werkzeugs bzw. seiner Schlüsselangriffsflächen-Formationen in die Maulschlüssel-Formation kann noch weiter dadurch gefördert werden, dass der Abstand zwischen den beiden maulöffnungsnäheren Schlüsselflächenbereichen der einander gegenüberliegenden Backen in Einführrichtung kleiner wird, mithin die maulöffnungsnäheren Schlüsselflächenbereiche in der Einführrichtung eine Art moderate Einführschräge bilden.

Zusätzlich oder alternativ kann der Abstand zwischen den beiden maulöffnungsferneren Schlüsselflächenbereichen in der Einführrichtung größer werden, sodass nur die beiden Scheitel der einander gegenüberliegenden Backen eine Engstelle der Maulschlüssel-Formation bilden, die in Einführrichtung jedoch kurz ist.

Die vorteilhafte Einleitung von Drehmoment in Schlüsselangriffsflächen-Formationen mit zwei zueinander und zur Werkzeugachse parallelen Schlüsselangriffsflächenbereichen über einen Flächenkontakt von Schlüsselflächenbereichen und zugeordneten Schlüsselangriffsflächenbereichen kann dadurch weiter verbessert werden, dass der maulöffnungsnähere Schlüsselflächenbereich der einen Backe zum maulöffnungsferneren Schlüsselflächenbereich der jeweils anderen, gegenüberliegenden Backe parallel ist. Somit kann außerdem bei flächiger Anlage der Schlüsselflächenbereiche an zugeordneten Schlüsselangriffsflächenbereichen ein möglichst großer Lastarm für die Drehmomenteinleitung genutzt werden. Der Lastarm ist bezogen auf die Werkzeugachse zu betrachten, um die herum das Zerspan-Werkzeug durch die Drehmomenteinleitung gedreht werden soll.

Wenngleich nicht ausgeschlossen sein soll, dass ein Schlüsselflächenbereich oder ein Teil der Schlüsselflächenbereiche ballig ausgebildet sein können, ist es zur Erzielung einer möglichst großen Berührfläche der Schlüsselflächenbereiche mit den zugeordneten Schlüsselangriffsflächenbereichen bei Drehmomenteinleitung vorteilhaft, wenn wenigstens ein Teil der Schlüsselflächenbereiche eben ist, vorausgesetzt dass auch die zum Anlageeingriff zugeordneten Schlüsselangriffsflächenbereiche eben sind. Zur Vermeidung eines Auftretens unerwünschter Axialkräfte bei der Drehmomenteinleitung sind die ebenen Schlüsselflächenbereiche vorzugsweise orthogonal zu einer Erstreckungsebene der Maulschlüssel-Formation, in welcher auch die Einführachse gelegen ist. Die Erstreckungsebene der Maulschlüssel-Formation ist bei idealem Anlageangriff der Maulschlüssel-Formation an dem zuvor beschriebenen Zerspan-Werkzeug orthogonal zur Werkzeugachse orientiert.

Um ein schnelles und einfaches Einführen des Zerspan-Werkzeugs bzw. seiner Schlüsselangriffsflächen-Formationen in die Maulschlüssel-Formation zu erreichen, kann in Einführrichtung zwischen der Maulöffnung und den beiden gegenüberliegenden maulöffnungsnäheren Schlüsselflächenbereichen eine sich in Einführrichtung verjüngende Einführschräge vorgesehen sein. Somit kann die Maulschlüssel-Formation zunächst eine grobe Einführschräge vorsehen, welche zu den maulöffnungsnäheren Schlüsselflächenbereichen hin führt. Diese Einführschräge kann einen Öffnungswinkel von mehr als 40° oder mehr als 50° haben. In der Praxis hat sich ein Öffnungswinkel von 60° bewährt. Die Flanken der Einführschräge bilden keine Schlüsselflächenbereiche, da bei Drehmomenteinleitung nach Herstellung eines ordnungsgemäßen Anlageeingriffs der Maulschlüssel-Formation mit einem Zerspan-Werkzeug keine Bauteil-Außenfläche des Zerspan-Werkzeugs in Kraft übertragende Anlage an eine Flanke der Einführschräge gelangt oder sich in einer solchen Anlage befindet.

Als Schlüsselflächenbereich ist daher nur jener Flächenbereich der Maulschlüssel-Formation anzusehen, welcher tatsächlich für einen Anlageeingriff an einen Schlüsselangriffsflächenbereich des Zerspan-Werkzeugs zum Zwecke der Drehmomentübertragung ausgebildet ist. Für einen Schlüsselangriffsflächenbereich des Zerspan-Werkzeugs gilt mutatis mutandis das Entsprechende.

Die Einführschräge kann dabei längs der Einführachse eine beträchtliche Länge aufweisen, um die Schlüsselangriffsflächen-Formationen des Zerspan-Werkzeugs während eines Einführvorgangs zielgenau zu den nur geringfügig geneigten und damit einen wesentlich geringeren Öffnungswinkel bildenden Schlüsselflächenbereichen der Maulschlüssel-Formation zu führen. Hierzu kann vorgesehen sein, dass der von der Einführschräge beiderseits der Einführachse begrenzte Maulbereich eine längs der Einführachse zu messende Länge aufweist, welche größer als die längs der Einführachse zu messende Länge des von den maulöffnungsnäheren Schlüsselflächenbereichen begrenzten Maulbereichs oder/und des von den maulöffnungsferneren Schlüsselflächenbereichen begrenzten Maulbereichs ist.

An dem der Maulöffnung in Einführrichtung entgegengesetzten Ende der Maulschlüssel-Formation sind die Backen bevorzugt durch eine Maulschlüssel-Basis miteinander verbunden. Die Backen sind bevorzugt einstückig mit der Basis ausgebildet.

Die Maulschlüssel-Formation kann an einem Schlüssel vorgesehen sein und kann insbesondere unlösbar mit dem Schlüssel verbunden sein. In diesem Falle ist für jede mögliche Maulweite ein gesonderter Schlüssel vorzusehen. Ein solcher Schlüssel hat zur gleichmäßigen und hochpräzisen Drehmomenteinleitung bevorzugt Handangriffe für eine Bedienperson beiderseits der Maulschlüssel-Formation.

In vielen Fällen reicht es jedoch aus, lediglich einen Schlüssel-Rahmen bereitzustellen, in welchen Einsatzbauteile mit Maulschlüssel-Formationen unterschiedlicher Maulweite auswechselbar einsetzbar sind.

Die Maulschlüssel-Formation ist bevorzugt an einem Bauteil aus Hartmetall oder Werkzeugstahl ausgebildet.

Im Falle eines Satzes von rotierbaren Zerspan-Werkzeugen mit unterschiedlichen Schlüsselweiten, etwa weil die einzelnen Zerspan-Werkzeuge unterschiedliche Durchmesser aufweisen, ist der Neigungswinkel zwischen zwei in Umfangsrichtung benachbarten bzw. unmittelbar benachbarten Schlüsselangriffsflächenbereichen für alle Schlüsselweiten bevorzugt gleich groß. Entsprechendes gilt für einen Satz von unterschiedlichen Einsatzbauteilen mit Maulschlüssel-Formationen unterschiedlicher Schlüsselweite. Auch hier sind die Neigungswinkel, mit welchen unmittelbar benachbarte Schlüsselflächenbereiche voneinander weg geneigt sind, für alle Schlüsselweiten bevorzugt gleich groß.

Als Zerspan-Werkzeug im Sinne der vorliegenden Anmeldung kann auch ein in ein Spannfutter eingesetztes und dort mit einer Überwurfmutter gesichertes Werkzeug angesehen werden. Dieses Zerspan-Werkzeug muss keine Schraubverbindungs-Formation an einem ihrer Längsendbereiche aufweisen. Die wie oben beschrieben ausgebildete Schlüsselangriffsflächen-Formation ist dann an der Überwurfmutter ausgebildet. Die vorliegende Erfindung betrifft somit auch eine Überwurfmutter für ein Werkzeug-Spannfutter mit Schlüsselangriffsflächen-Formationen, welche wie in der vorliegenden Anmeldung beschrieben ausgestattet sind. Insofern wird zur detaillierten Weiterbildung auch dieser Überwurfmutter auf den oben stehenden Text verwiesen, wobei der Begriff "Zerspan-Werkzeug" durch den Begriff "Spannfutter-Überwurfmutter" ersetzt gedacht sein soll.

Die vorliegende Erfindung wird nachfolgend anhand der beiliegenden Zeichnungen näher erläutert. Es stellt dar:
- Fig. 1: eine Längsschnittansicht durch eine Werkzeugaufnahme für eine Maschinenspindel einer Werkzeugmaschine mit einer ersten Ausführungsform eines erfindungsgemäßen Zerspan-Werkzeugs der vorliegenden Anmeldung mit spitzem Scheitel in den Schlüsselangriffsflächen-Formationen gemäß Anspruch 2,
- Fig. 2a: eine Seitenansicht des erfindungsgemäßen Zerspan-Werkzeugs von Fig. 1 gemäß der ersten Ausführungsform,
- Fig. 2b: eine Querschnittsansicht in der Schnittebene IIb-IIb von Fig. 2a durch den die Schlüsselangriffsflächen-Formationen tragenden Axialabschnitt des Zerspan-Werkzeugs von Fig. 2a,
- Fig. 3: eine Draufsicht eines ersten Beispiels einer von der vorliegenden Erfindung nicht umfassten und von den Ansprüchen nicht gedeckten Maulschlüssel-Formation, realisiert an einem Einsatzbauteil zur lösbaren Aufnahme in einem Schlüssel-Rahmen.
- Fig. 4a: eine Seitenansicht eines erfindungsgemäßen Zerspan-Werkzeugs gemäß einer zweiten Ausführungsform mit abgeplattetem Scheitel gemäß Anspruch 1 und
- Fig. 4b: eine Querschnittsansicht in der Schnittebene IVb-IVb von Fig. 4a durch den die Schlüsselangriffsflächen-Formationen tragenden Axialabschnitt des Zerspan-Werkzeugs von Fig. 4a.

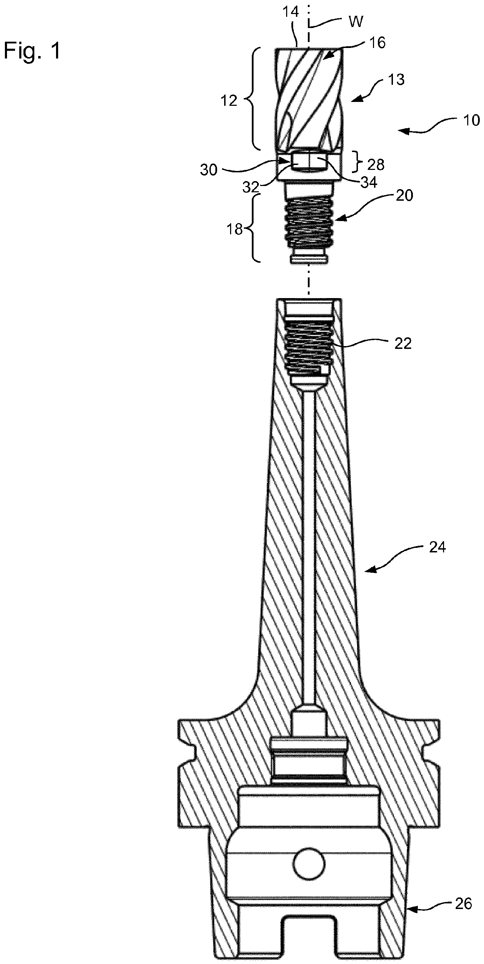

In Fig. 1 ist eine erste Ausführungsform eines erfindungsgemäßen Zerspan-Werkzeugs in beispielhafter Form eines Fräskopfes allgemein mit 10 bezeichnet. Der Werkzeugkopf 10 erstreckt sich längs einer Werkzeugachse W, um welche der Werkzeugkopf 10 während seiner betriebsmäßigen spanenden Werkstückbearbeitung rotiert. In seinem einen axialen Längsendbereich 12 ist der Werkzeugkopf 10 mit einer Zerspan-Formation 13 versehen, vorliegend mit einer Mehrzahl von Schneiden 14 und wendelförmig um die Werkzeugachse W verlaufenden Spanabführnuten 16.

An seinem entgegengesetzten anderen Längsendbereich 18 ist der Werkzeugkopf 10 mit einer Schraubverbindungs-Formation, also mit einem Gewinde 20, versehen, welches in das Innengewinde 22 einer Werkzeugaufnahme 24 einschraubbar ist. Das Gewinde 20 braucht nicht bis zum äußersten Längsende des Werkzeugkopfes 10 zu reichen.

Die Werkzeugaufnahme 24 weist an ihrem dem Innengewinde 22 entgegengesetzten Längsende eine Kopplungsformation 26 zur Kopplung mit einer nicht dargestellten Maschinenspindel einer Werkzeugmaschine auf, im vorliegenden Beispiel eine Kopplungsformation 26 in Gestalt eines Hohlschaftkegels, etwa nach DIN 69893. Anstelle der Werkzeugaufnahme 24 kann der Werkzeugkopf 10 in ein - vorzugsweise zylindrisches - Schaftbauteil oder in eine Werkzeugaufnahme mit Steilkegel-Kopplungsformation eingedreht werden.

Werkzeugaufnahmen wie die Werkzeugaufnahme 24 in Fig. 1 sind allgemein bekannt und werden hier nicht weiter erläutert.

Der Werkzeugkopf 10 weist in einem Axialabschnitt 28, welcher zwischen den Längsendbereichen 12 und 18 gelegen ist, welcher sich aber mit dem die Zerspan-Formation 13 tragenden Längsendbereich 12 überlappen kann, eine Schlüsselangriffsflächen-Formation 30 auf, welche zwei in Umfangsrichtung um die Werkzeugachse W unmittelbar benachbarte Schlüsselangriffsflächenbereiche 32 und 34 aufweist.

Diese Schlüsselangriffsflächen-Formation 30 bzw. die zu ihr gehörenden Schlüsselangriffsflächenbereiche 32 und 34 dienen unter anderem einem möglichst flächigen Anlageeingriff durch Schlüsselflächenbereiche eines Schlüssels, um den Werkzeugkopf 10 in das Innengewinde 22 der Werkzeugaufnahme 24 einzudrehen und wieder aus dieser auszudrehen.

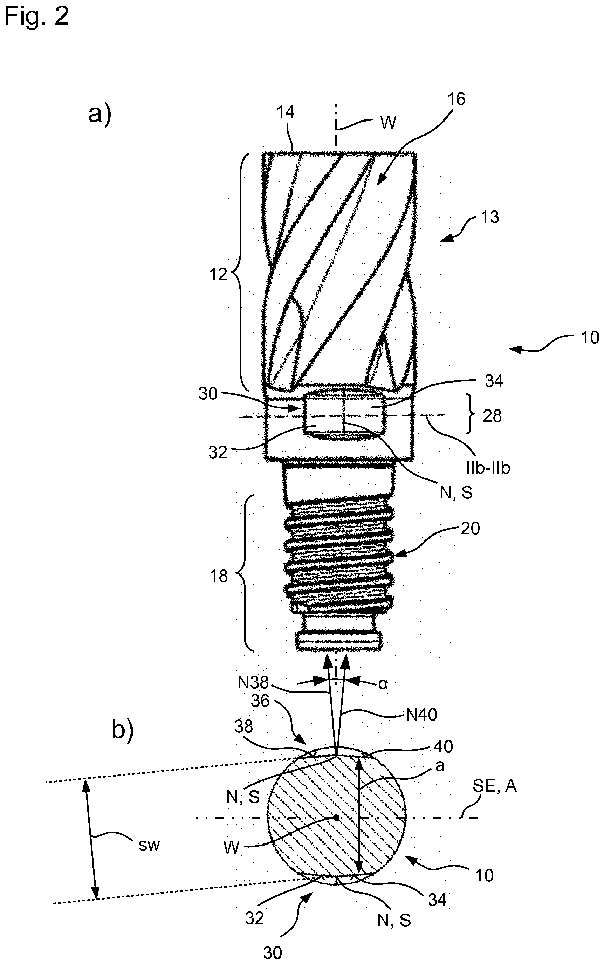

Der Werkzeugkopf 10 von Fig. 1 ist in Fig. 2a in der gleichen Ansicht, jedoch größer dargestellt. Eine Linie N am Übergang zwischen den Schlüsselangriffsflächenbereichen 32 und 34 deutet eine bevorzugt zur Werkzeugachse W parallele Neigeachse an, um welche die Schlüsselangriffsflächenbereiche 32 und 34 voneinander weg geneigt sind, sodass sie einen Scheitel S bilden, welcher von der Werkzeugachse W weg vorsteht.

Auf der vom Betrachter der Fig. 2a abgewandten Seite ist eine weitere Schlüsselangriffsflächen-Formation 36 ausgebildet, welche bezüglich einer zur Zeichenebene von Fig. 2a parallelen Spiegelsymmetrieebene SE zur Schlüsselangriffsflächen-Formation 30 spiegelsymmetrisch ausgebildet ist (siehe auch Fig. 2b). Diese zweite Schlüsselangriffsflächen-Formation 36 weist dementsprechend die Schlüsselangriffsflächenbereiche 38 und 40 auf, die ebenfalls um eine zur Werkzeugachse W parallele Neigeachse N voneinander weg geneigt sind, und zwar um den gleichen Winkel α von etwa 5°, um welchen auch die Schlüsselangriffsflächenbereiche 32 und 34 voneinander weg geneigt sind. Auch die Schlüsselangriffsflächenbereiche 38 und 40 bilden somit einen von der Werkzeugachse W weg vorstehenden Scheitel S.

Die Schnittebene IIb-IIb von Fig. 2a, welche die Ansicht von Fig. 2b bestimmt, ist orthogonal zur Werkzeugachse W. Somit sind die Werkzeugachse W sowie die Neigeachsen N orthogonal zur Zeichenebene der Fig. 2b.

In Fig. 2b ist der Normalenvektor N38 des Schlüsselangriffsflächenbereichs 38 und der Normalenvektor N40 des Schlüsselangriffsflächenbereichs 40 mit ihren Fußpunkten in denselben Ort verschoben dargestellt. Die beiden Normalenvektoren N38 und N40 schließen den Neigungswinkel α der Schlüsselangriffsflächenbereiche 38 und 40 ein. Aus Gründen der Übersichtlichkeit der Darstellung der Fig. 2b sind die Normalenvektoren nur an den Schlüsselangriffsflächenbereichen 38 und 40 gezeigt, für die verbleibenden Schlüsselangriffsflächenbereiche 32 und 34 gilt Entsprechendes.

Da die Schlüsselangriffsflächenbereiche 32, 34, 38 und 40 des Zerspan-Werkzeugs 10 im Ausführungsbeispiel in Umfangsrichtung um die Werkzeugachse gleich lang sind, sind die Schlüsselangriffsflächen-Formationen 30 und 36 auch bezüglich der Werkzeugachse W als Rotationssymmetrieachse rotationssymmetrisch zueinander. Die Schlüsselangriffsflächen-Formationen 30 und 36 sind somit durch Drehung um 180° um die Werkzeugachse W ineinander überführbar.

In der Symmetrieebene SE liegt die zur Werkzeugachse W orthogonale Aufschubachse A, längs welcher ein Schlüssel, genauer: eine Maulschlüssel-Formation des Schlüssels, auf die Schlüsselangriffsflächen-Formationen 30 und 36 aufgeschoben werden kann, um eine Bereitschaftsstellung für eine Drehmomenteinleitung in die Schlüsselangriffsflächenbereiche 32 und 40 einerseits oder 34 und 38 andererseits - je nach Drehrichtung - herzustellen.

Die in diametral einander gegenüberliegenden Umfangsbereichen gelegenen Schlüsselangriffsflächenbereiche 32 und 40 einerseits und 34 und 38 andererseits sind bevorzugt zueinander parallel. In der in den Fig. 1 bis 2b gezeigten ersten Ausführungsform sind die Schlüsselangriffsflächenbereiche 32, 34, 38 und 40 jeweils eben und parallel zur Werkzeugachse W orientiert.

Die Umfangsbereiche zwischen den Schlüsselangriffsflächen-Formationen 30 und 36 weisen die ursprüngliche teilzylindrische Gestalt des Zylinder-Rohlings auf, aus dem das beispielhaft dargestellte Zerspan-Werkzeug 10 gefertigt wurde.

Wie in Fig. 2b gut zu erkennen ist, bilden die über die Aufschubachse A hinweg einander gegenüberliegenden Schlüsselangriffsflächenbereiche 34 und 40 einerseits sowie 32 und 38 andererseits aufgrund ihrer geneigten Anordnung relativ zur Werkzeugachse W eine Aufschubhilfe für eine längs der Aufschubachse A auf die Schlüsselangriffsflächen-Formationen 30 und 36 aufzuschiebende Maulschlüssel-Formation. Ein zwischen einander über die Aufschubachse A hinweg gegenüberliegenden Schlüsselangriffsflächenbereichen 34 und 40 oder 32 und 38 bestehender Abstand a wird aufgrund der relativ zueinander geneigten Anordnung der Schlüsselangriffsflächenbereiche mit zunehmender Entfernung von der Werkzeugachse W längs der Aufschubachse kleiner, sodass die genannten Schlüsselangriffsflächenbereichs-Paare 34 und 40 sowie 32 und 38 jeweils eine Art Aufschub- bzw. Einführschräge für eine aufzuschiebende Maulschlüssel-Formation bilden.

Die für eine Drehmomenteinleitung in das Zerspan-Werkzeug 10 geeignete Schlüsselweite sw ergibt sich durch den Abstand der Erstreckungsebenen von zueinander parallelen Schlüsselangriffsflächenbereichen 32 und 40 einerseits und 34 und 38 andererseits. In Fig. 2b ist die Schlüsselweite sw für das Schlüsselangriffsflächenbereichs-Paar 34 und 38 strichliniert angedeutet. Da die Schlüsselweite sw wesentlich größer ist als der Abstand a, gemessen an dem von der Werkzeugachse W weitest entfernt gelegenen Ort der jeweiligen Schlüsselangriffsflächenbereichs-Paare, kann einerseits die Maulschlüssel-Formation mit sehr geringer Maßtoleranz gefertigt und bereitgestellt werden und dennoch ohne aufwendiges Einfädeln auf die Schlüsselangriffsflächen-Formationen 30 und 36 aufgeschoben werden. Die Schlüsselweite sw ist bevorzugt für beide Schlüsselangriffsflächenbereichs-Paare gleich groß.

Aufgrund der so mit lediglich geringen Maßtoleranzen bereitgestellten hochgenau passenden Maulschlüssel-Formation kann eine flächige Anlage von Schlüsselflächenbereichen der Maulschlüssel-Formation zur Einleitung eines Drehmoments in den Werkzeugkopf 10 flächig an den Schlüsselangriffsflächenbereichen 32 und 40 einerseits oder 34 und 38 andererseits anliegen, sodass aufgrund der höheren Berührfläche auch ein höheres Drehmoment in den Werkzeugkopf eingeleitet werden kann, ohne dass eine Beschädigung der Schlüsselangriffsflächen-Formationen 30 und 36 zu befürchten ist.

Für eine Drehmomenteinleitung in die Schlüsselangriffsflächen-Formationen 30 und 36 kann eine herkömmliche Maulschlüssel-Formation mit lediglich zwei ebenen einander gegenüberliegenden und zueinander parallelen Schlüsselflächen verwendet werden.

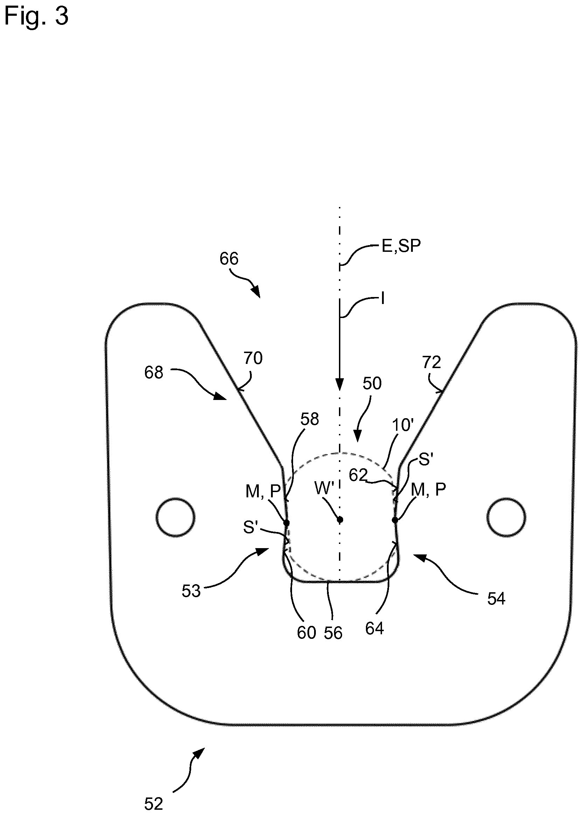

Sofern die vorteilhafte technische Wirkung der oben beschriebenen Gestaltung der Drehmoment-Einleitungsstelle auch dann nutzbar sein soll, wenn nur ein herkömmlicher Werkzeugkopf mit Schlüsselangriffsflächen-Formationen mit jeweils nur genau einer zur Werkzeugachse und zueinander parallelen Schlüsselangriffsflächen zur Verfügung steht, kann dies durch eine Maulschlüssel-Formation 50 geschehen, wie sie in Fig. 3 dargestellt ist. Die Maulschlüssel-Formation 50 von Fig. 3 ist an einem an sich bekannten Einsatzbauteil 52 zur lösbaren Aufnahme in einem nicht dargestellten Schlüssel-Rahmen ausgebildet. Das Einsatzbauteil 52 ist ein im Wesentlichen ebenes Bauteil, d. h. es erstreckt sich in den Haupterstreckungsrichtungen seiner Erstreckungsebene in wesentlich größeren Abmessungen als in seiner Dickenrichtung orthogonal hierzu. Die Erstreckungsebene des Einsatzbauteils 52 ist in Fig. 3 parallel zur Zeichenebene von Fig. 3. Die Erstreckungsebene des Einsatzbauteils 52 ist auch die Erstreckungsebene der Maulschlüssel-Formation, die ebenfalls ein ebenes Gebilde ist.

In Fig. 3 ist strichliniert die Umrisslinie eines Axialabschnitts eines herkömmlichen Werkzeugkopfes 10' gezeigt, welcher genau zwei Schlüsselangriffsflächen-Formationen mit jeweils nur einer Schlüsselfläche S' aufweist, welche sowohl zueinander als auch zur Werkzeugachse parallel und eben sind. Die Werkzeugachse W' des herkömmlichen Werkzeugkopfes in Fig. 3 ist ebenfalls angezeigt.

Die Maulschlüssel-Formation 50 weist zwei einander gegenüberliegende Backen 53 und 54 auf, welche durch eine die Maulschlüssel-Formation begrenzende Basis 56 miteinander verbunden sind.

Ein Werkzeugkopf 10' ist längs der Einführachse E in der Einführrichtung I in die Maulschlüssel-Formation 50 einführbar, bevorzugt bis ein Außenflächenbereich des Werkzeugkopfes 10 an der Basis 56 der Maulschlüssel-Formation 50 anliegt.

Die Einführachse E liegt in der Erstreckungsebene der Maulschlüssel-Formation 50 oder parallel zu dieser. Die Einführachse E ist somit parallel zur Zeichenebene der Fig. 3 orientiert. Die Backen 53 und 54 liegen einander über die Einführachse E hinweg gegenüber. Die Backe 53 weist dabei genau zwei Schlüsselflächenbereiche 58 und 60 auf, welche längs der Einführachse E unmittelbar aufeinander folgen und welche um eine Neigungsachse M voneinander weg geneigt sind. Der Neigungswinkel im dargestellten Beispiel entspricht etwa 5°. Der Neigungswinkel ist bevorzugt der gleiche wie jener zwischen den Schlüsselangriffsflächenbereichen 32, 34 und 38, 40.

Wiederum sind die Backen 53 und 54 bezüglich einer zur Zeichenebene von Fig. 3 orthogonalen, die Einführachse E enthaltenden Symmetrieebene SP spiegelsymmetrisch ausgebildet, sodass die Schlüsselflächenbereiche 62 und 64 der Backe 54 unter Angabe der Symmetriebedingung mit der Beschreibung der Schlüsselflächenbereiche 58 und 60 der Backe 53 ausreichend erklärt sind und keiner weiteren Erläuterung bedürfen. Alle Schlüsselflächenbereiche 58, 60, 62 und 64 in dem in Fig. 3 gezeigten Beispiel sind eben und orthogonal zur Erstreckungsebene des Einsatzbauteils 52 bzw. der Maulschlüssel-Formation 50 orientiert.

Die maulöffnungsnäheren Schlüsselflächenbereiche 58 und 62 einer Backe 53 oder 54 sind zu den maulöffnungsferneren Schlüsselflächenbereichen 60 und 64 der jeweils anderen Backe 54 oder 53 parallel, um in einer möglichst flächigen Anlage an Schlüsselangriffsflächen-Formationen S' eines Werkzeugkopfes Drehmoment in diesen einleiten zu können. Im dargestellten Beispiel sind die zueinander parallelen Schlüsselflächenbereiche 58 und 64 mit den Schlüsselangriffsflächen-Formationen des herkömmlichen Werkzeugkopfes 10' in flächigem Anlageeingriff und bereit zur Drehmomentübertragung im Uhrzeigersinn um die Werkzeugachse W'.

Zur erleichterten Einführung des Werkzeugkopfes 10' und seiner Schlüsselangriffsflächen-Formationen in die Maulschlüssel-Formation 50 kann ausgehend von der Maulöffnung 66 eine Einführschräge 68 ausgebildet sein, welche ausgehend von der Maulöffnung 66 zu den maulöffnungsnäheren Schlüsselflächenbereichen 58 und 62 hinführt.

Die Einführschräge 68 ist vorzugsweise ebenfalls symmetrisch zu der zuvor beschriebenen Symmetrieebene SP ausgebildet und ist durch zwei Flanken 70 und 72 definiert, die einen Winkel von größer als 40°, im gezeigten Beispiel von etwa 60°, einschließen und ausgehend von der Maulöffnung 66 in Richtung zur Maulschlüssel-Formation 50 aufeinander zu verlaufen.

Die Schlüsselflächenbereiche 58 und 60 bilden ebenso wie die Schlüsselflächenbereiche 62 und 64 einen zur jeweils anderen Backe hin vorstehenden Scheitel P. Der Abstand von einander unmittelbar über die Einführachse E hinweg gegenüberliegenden maulöffnungsnäheren Schlüsselflächenbereichen 58 und 62 wird mit zunehmender Annäherung in Einführrichtung I an die Scheitel P immer kleiner, sodass die maulöffnungsnäheren Schlüsselflächenbereiche 58 und 62 eine Einführhilfe für die Einführung eines Werkzeugkopfes 10' in die Maulschlüssel-Formation 50 bieten.

Die maulöffnungsferneren Schlüsselflächenbereiche 60 und 64 sind derart geneigt, dass ihr über die Einführachse E hinweg gemessener Abstand mit zunehmender Entfernung von den Scheiteln P größer wird, sodass lediglich die Scheitel P der beiden Backen 52 und 54 eine Engstelle der Maulschlüssel-Formation 50 bilden, die für einen Werkzeugkopf leicht zu überwinden ist, da der Abstand der Scheitel P zueinander immer noch wesentlich größer ist als die Schlüsselweite sw.

Wie Fig. 3 zeigt, ist die Länge der Einführschräge 68 längs der Einführachse E länger als die Länge des durch die Schlüsselflächenbereiche 58, 60, 62 und 64 begrenzten Bereichs der Maulschlüssel-Formation 50, ebenfalls gemessen längs der Einführachse E.

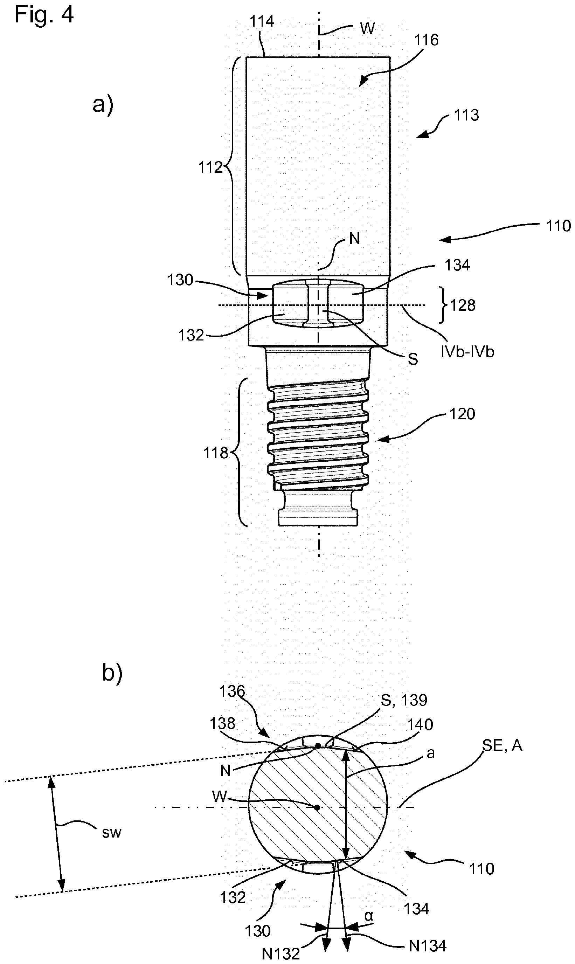

In den Fig. 4a und 4b ist den Ansichten der Fig. 2a bzw. 2b entsprechend eine zweite Ausführungsform eines erfindungsgemäßen Werkzeugkopfes dargestellt. Gleiche und baugleiche Bauteile bzw. Bauteilabschnitte wie in der ersten Ausführungsform der Fig. 2a bzw. 2b sind in den Fig. 4a und 4b mit gleichen Bezugszeichen versehen, jedoch erhöht um die Zahl 100. Die in den Fig. 4a und 4b dargestellte zweite Ausführungsform wird nachfolgend nur insofern beschrieben, als sie sich von der ersten Ausführungsform unterscheidet, auf deren Beschreibung ansonsten auch zur Beschreibung der zweiten Ausführungsform ausdrücklich verwiesen wird.

Die Zerspan-Formation 113 ist in Fig. 4a lediglich schematisch angedeutet. Diese kann die gleiche oder eine andere Ausgestaltung aufweisen wie die Zerspan-Formation 13 der ersten Ausführungsform.

Der wesentliche Unterschied zwischen den Ausführungsformen der Fig. 2a und 2b einerseits und den Fig. 4a und 4b andererseits liegt in der Ausgestaltung der Schlüsselangriffsflächen-Formationen 130 und 136. Anders als bei der ersten Ausführungsform, die spitze Scheitel S zwischen in Umfangsrichtung um die Werkzeugachse W unmittelbar benachbarten Schlüsselangriffsflächenbereichen aufweist, ist bei der zweiten Ausführungsform der zwischen den Schlüsselangriffsflächenbereichen 132 und 134 der Schlüsselangriffsflächen-Formation 130 und zwischen den Schlüsselangriffsflächenbereichen 138 und 140 gebildete Scheitel S abgeplattet, d.h. der jeweilige Scheitel S ist durch einen in Umfangsrichtung zwischen den Schlüsselangriffsflächenbereichen derselben Schlüsselangriffsflächen-Formation gelegenen Zwischenflächenbereich 139 gebildet.

Der Zwischenflächenbereich 139, welcher aus Gründen der besseren Übersichtlichkeit in Fig. 4b lediglich in der Schlüsselangriffsflächen-Formation 136 mit einem Bezugszeichen versehen ist, kann um eine zur Werkzeugachse W parallele Krümmungsachse konvex oder sogar konkav gekrümmt sein, ist jedoch aus Gründen einfacher Fertigung bevorzugt eben. Aufgrund der Abplattung ist der Abstand a zwischen den Scheiteln S der zweiten Ausführungsform geringer als der Abstand a der Scheitel S der ersten Ausführungsform. Dies erleichtert das Einführen der Schlüsselangriffsflächen-Formationen 130 und 136 in eine passende Maulschlüssel-Formation bzw. das Aufschieben einer passenden Maulschlüssel-Formation auf die genannten Schlüsselangriffsflächen-Formationen erheblich.

Im Gegensatz zu den Scheiteln S, die durch die Bildung des Zwischenflächenbereichs 139 nicht mehr nur linienförmig, sondern flächig ausgebildet sind, bleibt die Neigeachse N im Wesentlichen unverändert. Die zur Zeichenebene der Fig. 2b orthogonale Neigeachse N ist in Fig. 2b für die Schlüsselangriffsflächen-Formation 136 dargestellt.

An der Schlüsselangriffsflächen-Formation 130 sind die Normalenvektoren N132 und N134 der Schlüsselangriffsflächenbereiche 132 bzw. 134 und der von ihnen eingeschlossene Winkel α dargestellt. Der Normalenvektor N134 ist an seinem Schlüsselangriffsflächenbereich 134 gezeigt. Der Normalenvektor N132 des Schlüsselangriffsflächenbereichs 132 ist mit seinem Fußpunkt in den Fußpunkt des Normalenvektors N134 verschoben, um den eingeschlossenen Winkel α veranschaulichen zu können.

Auch für die Schlüsselangriffsflächen-Formationen 130 und 136 der zweiten Ausführungsform gilt, dass die Schlüsselweite sw nicht kleiner ist als der Abstand der Scheitel S voneinander, was das Aufschieben einer passenden Maulschlüssel-Formation auf die Schlüsselangriffsflächen-Formationen 130 und 136 erleichtert. Ebenso ist die Schlüsselweite sw unverändert deutlich größer als der Abstand a einander über die Aufschubachse A hinweg gegenüberliegender Schlüsselangriffsflächenbereiche 134 und 140 einerseits sowie 132 und 138 andererseits an ihrem jeweils der Werkzeugachse W fernsten Ort.

## Patentansprüche

1. Rotierbares Zerspan-Werkzeug (110), welches sich längs einer eine axiale Richtung definierenden Werkzeugachse (W) erstreckt, wobei das Zerspan-Werkzeug (110) in einem ersten axialen Längsendbereich (112) eine Zerspan-Formation (113) aufweist, welche zum Materialabtrag an einem Werkstück ausgebildet ist, wobei das Zerspan-Werkzeug (110) in einem dem ersten entgegengesetzten zweiten axialen Längsendbereich (118) eine Schraubverbindungs-Formation (120) aufweist, welche zur Schraubverbindung mit einem Kopplungsbauteil (24) ausgebildet ist, und wobei das Zerspan-Werkzeug (110) einander bezüglich der Werkzeugachse (W) diametral gegenüberliegende Schlüsselangriffsflächen-Formationen (130, 136) aufweist, welche zum Drehmoment übertragenden Anlageeingriff mit Schlüsselflächen (58, 60, 62, 64) eines Schlüssels ausgebildet sind, wobei jede der Schlüsselangriffsflächen-Formationen (130, 136) zwei in Umfangsrichtung um die Werkzeugachse (W) benachbarte, mit Abstand voneinander vorgesehene Schlüsselangriffsflächenbereiche (132/134, 138/140) aufweist, welche derart voneinander weg geneigt sind, dass sie einen von der Werkzeugachse (W) weg vorstehenden Scheitel (S) bilden, wobei zwischen den relativ zueinander geneigten Schlüsselangriffsflächenbereichen (138/140) ein Zwischenflächenbereich vorgesehen ist, sodass der Scheitel (S) abgeplattet ist,
**dadurch gekennzeichnet, dass** der Winkel (a), den die Normalenvektoren (N132, N134) der in Umfangsrichtung benachbarten, relativ zueinander geneigten Schlüsselangriffsflächenbereiche (132/134, 138, 140) einer der Schlüsselangriffsflächen-Formationen (130, 136) einschließen, kleiner als oder gleich 15° ist.

2. Rotierbares Zerspan-Werkzeug (10), welches sich längs einer eine axiale Richtung definierenden Werkzeugachse (W) erstreckt, wobei das Zerspan-Werkzeug (10) in einem ersten axialen Längsendbereich (12) eine Zerspan-Formation (13) aufweist, welche zum Materialabtrag an einem Werkstück ausgebildet ist, wobei das Zerspan-Werkzeug (10) in einem dem ersten entgegengesetzten zweiten axialen Längsendbereich (18) eine Schraubverbindungs-Formation (20) aufweist, welche zur Schraubverbindung mit einem Kopplungsbauteil (24) ausgebildet ist, und wobei das Zerspan-Werkzeug (10) einander bezüglich der Werkzeugachse (W) diametral gegenüberliegende Schlüsselangriffsflächen-Formationen (30, 36) aufweist, welche zum Drehmoment übertragenden Anlageeingriff mit Schlüsselflächen (58, 60, 62, 64) eines Schlüssels ausgebildet sind, wobei jede der Schlüsselangriffsflächen-Formationen (30, 36) zwei in Umfangsrichtung um die Werkzeugachse (W) benachbarte, unmittelbar aneinander angrenzend vorgesehene Schlüsselangriffsflächenbereiche (32/34, 38/40) aufweist, welche derart voneinander weg geneigt sind, dass sie einen von der Werkzeugachse (W) weg vorstehenden spitzen Scheitel (S) bilden,
**dadurch gekennzeichnet, dass** der Winkel (a), den die Normalenvektoren (N38, N40) der unmittelbar in Umfangsrichtung benachbarten, relativ zueinander geneigten Schlüsselangriffsflächenbereiche (32/34, 38/40) einer der Schlüsselangriffsflächen-Formation (30, 36) einschließen, kleiner als oder gleich 15° ist.

3. Rotierbares Zerspan-Werkzeug (10; 110) nach Anspruch 1 oder Anspruch 2, **dadurch gekennzeichnet, dass** eine Neigeachse (N), um welche die zwei in Umfangsrichtung um die Werkzeugachse (W) benachbarten bzw. unmittelbar benachbarten Schlüsselangriffsflächenbereiche (32/34, 38/40; 132/134, 138/140) wenigstens einer der Schlüsselangriffsflächen-Formationen (30, 36; 130, 136) relativ zueinander geneigt sind, parallel zur Werkzeugachse (W) ist.

4. Rotierbares Zerspan-Werkzeug (10; 110) nach einem der Ansprüche 1 bis 3, **dadurch gekennzeichnet, dass** wenigstens ein Schlüsselangriffsflächenbereich (32, 34, 38, 40; 132, 134, 138, 140), vorzugsweise alle Schlüsselangriffsflächenbereiche (32, 34, 38, 40; 132, 134, 138, 140), wenigstens einer der Schlüsselangriffsflächen-Formationen (30, 36; 130, 136), vorzugsweise beider Schlüsselangriffsflächen-Formationen (30, 36; 130, 136), eben ist bzw. sind.

5. Rotierbares Zerspan-Werkzeug (10; 110) nach Anspruch 4,
**dadurch gekennzeichnet, dass** der wenigstens eine ebene Schlüsselangriffsflächenbereich (32, 34, 38, 40; 132, 134, 138, 140), vorzugsweise dass alle ebenen Schlüsselangriffsflächenbereiche (32, 34, 38, 40; 132, 134, 138, 140) parallel zur Werkzeugachse (W) orientiert ist bzw. sind.

6. Rotierbares Zerspan-Werkzeug (10; 110) nach einem der vorhergehenden Ansprüche,
**dadurch gekennzeichnet, dass** der Winkel (a), den die Normalenvektoren (N38, N40; N132, N134) der in Umfangsrichtung benachbarten bzw. unmittelbar benachbarten, relativ zueinander geneigten Schlüsselangriffsflächenbereiche (32/34, 38/40) einer der Schlüsselangriffsflächen-Formationen (30, 36) einschließen, kleiner als oder gleich 10°, bevorzugt kleiner als oder gleich 7,5°, stärker bevorzugt kleiner als oder gleich 5° ist.

7. Rotierbares Zerspan-Werkzeug (10; 110) nach einem der vorhergehenden Ansprüche,
**dadurch gekennzeichnet, dass** das Zerspan-Werkzeug (10; 110) zwei Schlüsselangriffsflächen-Formationen (30, 36; 130, 136) aufweist, welche bezüglich einer die Werkzeugachse (W) enthaltenden Symmetrieebene (SE) spiegelsymmetrisch sind oder/und welche bezüglich der Werkzeugachse (W) als Symmetrieachse rotationssymmetrisch sind.

8. Rotierbares Zerspan-Werkzeug (10; 110) nach einem der vorhergehenden Ansprüche,
**dadurch gekennzeichnet, dass** wenigstens einer der Schlüsselangriffsflächenbereiche (32, 34, 38, 40; 132, 134, 138, 140) der einen Schlüsselangriffsflächen-Formation (30 oder 36; 130 oder 136) der Schlüsselangriffsflächen-Formationen (30, 36; 130, 136) parallel zu einem der Schlüsselangriffsflächenbereiche (32, 34, 38, 40; 132, 134, 138, 140) der anderen Schlüsselangriffsflächen-Formation (36 oder 30; 136 oder 130) der Schlüsselangriffsflächen-Formationen (30, 36; 130, 136) ist, wobei vorzugsweise jeder Schlüsselangriffsflächenbereich (32, 34, 38, 40; 132, 134, 138, 140) der einen Schlüsselangriffsflächen-Formation (30 oder 36; 130 oder 136) der Schlüsselangriffsflächen-Formationen (30, 36; 130, 136) parallel zu einem Schlüsselangriffsflächenbereich der anderen Schlüsselangriffsflächen-Formation (36 oder 30; 136 oder 130) der Schlüsselangriffsflächen-Formationen (30, 36; 130, 136) ist.

9. Rotierbares Zerspan-Werkzeug (10; 110) nach Anspruch 8,
**dadurch gekennzeichnet, dass** zueinander parallele Schlüsselangriffsflächenbereiche (32/40, 34/38; 132/134, 138/140) unterschiedlicher Schlüsselangriffsflächen-Formationen (30, 36; 130, 136) der Schlüsselangriffsflächen-Formationen (30, 36; 130, 136) in einander diametral gegenüberliegenden Umfangsbereichen des Zerspan-Werkzeugs (10; 110) gelegen sind.

10. Rotierbares Zerspan-Werkzeug (10; 110) nach einem der vorhergehenden Ansprüche,
**dadurch gekennzeichnet, dass** das Zerspan-Werkzeug (10; 110) genau zwei Schlüsselangriffsflächen-Formationen (30, 36; 130, 136) aufweist.

11. Rotierbares Zerspan-Werkzeug (10; 110) nach einem der vorhergehenden Ansprüche,
**dadurch gekennzeichnet, dass** jede der Schlüsselangriffsflächen-Formationen (30, 36; 130, 136) genau zwei relativ zueinander geneigte Schlüsselangriffsflächenbereiche (32/34, 38/40; 132/134, 138/140) aufweist.

## Claims

1. Rotatable machining tool (110) which extends along a tool axis (W) defining an axial direction, wherein the machining tool (110) has, in an first axial longitudinal end region (112), a machine formation (113) which is designed to remove material from a workpiece, wherein the machining tool (110) has, in a second axial longitudinal end region (118) opposite the first, a screw connection formation (120) which is designed for screw connection to a coupling component (24), and wherein the machining tool (110) has wrench engagement surface formations (130, 136) which are situated diametrically opposite one another with respect to the tool axis (W) and which are designed for torque-transmitting bearing engagement with wrench surfaces (58, 60, 62, 64) of a wrench, wherein each of the wrench engagement surface formations (130, 136) as two wrench engagement surface regions (132/134, 138/140) which are adjacent in the circumferential direction about the tool axis (W), are provided at a distance from one another and are inclined away from one another in such a way that they form an apex (S) projecting away from the tool axis (W), wherein an intermediate surface region is provided between the wrench engagement surface regions (138/140) which are inclined relative to one another, with the result that the apex (S) is flattened, **characterized in that** the angle (α) which is enclosed by the normal vectors (N132, N134) of the wrench engagement surface regions (132/134, 138, 140), which are adjacent in the circumferential direction and inclined relative to one another, of one of the wrench engagement surface formations (130, 136) is less than or equal to 15°.

2. Rotatable machining tool (10) which extends along a tool axis (W) defining an axial direction, wherein the machining tool (10) has, in a first axial longitudinal end region (12), a machining formation (13) which is designed to remove material from a workpiece, wherein the machining tool (10) has, in a second axial longitudinal end region (18) opposite the first, a screw connection formation (20) which is designed for screw connection to a coupling component (24), and wherein the machining tool (10) has wrench engagement surface formations (30, 36) which are situated diametrically opposite to one another with respect to the tool axis (W) and which are designed for torque-transmitting bearing engagement with wrench surfaces (58, 60, 62, 64) of a wrench, wherein each of the wrench engagement surface formations (30, 36) has two wrench engagement surface regions (32/34, 38/40) which are adjacent in the circumferential direction about the tool axis (W), are provided directly adjoining one another and are inclined away from one another in such a way that they form a sharp apex (S) projecting away from the tool axis (W), **characterized in that** the angle (α) which is enclosed by the normal vectors (N38, N40) of the wrench engagement surface regions (32/34, 38/40), which are directly adjacent in the circumferential direction and inclined relative to one another, of one of the wrench engagement surface formations (30, 36) is less than or equal to 15°.

3. Rotatable machining tool (10; 110) according to Claim 1 or Claim 2, **characterized in that** an axis of inclination (N) by which the two wrench engagement surface regions (32/34, 38/40; 132/134, 138/140), which are adjacent or directly adjacent in the circumferential direction about the tool axis (W), of at least one of the wrench engagement surface formations (30, 36; 130, 136) are inclined relative to one another is parallel to the tool axis (W) .

4. Rotatable machining tool (10; 110) according to one of Claims 1 to 3, **characterized in that** at least one wrench engagement surface region (32, 34, 38, 40; 132, 134, 138, 140), preferably all wrench engagement surface regions (32, 34, 38, 40; 132, 134, 138, 140), of at least one of the wrench engagement surface formations (30, 36; 130, 136), preferably of both wrench engagement surface formations (30, 36; 130, 136), is or are planar.

5. Rotatable machining tool (10; 110) according to Claim 4, **characterized in that** the at least one planar wrench engagement surface region (32, 34, 38, 40; 132, 134, 138, 140), preferably **in that** all planar wrench engagement surface regions (32, 34, 38, 40; 132, 134, 138, 140), is or are oriented parallel to the tool axis (W).

6. Rotatable machining tool (10; 110) according to one of the preceding claims, **characterized in that** the angle (α) which is enclosed by the normal vectors (N38, N40; N132, N134) of the wrench engagement surface regions (32/34, 38/40), which are adjacent or directly adjacent in the circumferential direction and inclined relative to one another, of one of the wrench engagement surface formations (30, 36) is less than or equal to 10°, preferably less than or equal to 7.5°, more preferably less than or equal to 5°.

7. Rotatable machining tool (10; 110) according to one of the preceding claims, **characterized in that** the machining tool (10; 110) has two wrench engagement surface formations (30, 36; 130, 136) which are mirror-symmetrical with respect to a plane of symmetry (SE) containing the tool axis (W) and/or which are rotationally symmetrical with respect to the tool axis (W) as axis of symmetry.

8. Rotatable machining tool (10; 110) according to one of the preceding claims, **characterized in that** at least one of the wrench engagement surface regions (32, 34, 38, 40; 132, 134, 138, 140) of the one wrench engagement surface formation (30 or 36, 130 or 136) of the wrench engagement surface formations (30, 36; 130, 136) is parallel to one of the wrench engagement surface regions (32, 34, 38, 40; 132, 134, 138, 140) of the other wrench engagement surface formation (36 or 30; 136 or 130) of the wrench engagement surface formations (30, 36; 130, 136), wherein preferably each wrench engagement surface region (32, 34, 38, 40; 132, 134, 138, 140) of the one wrench engagement surface formation (30 or 36; 130 or 136) of the wrench engagement surface formations (30, 36; 130, 136) is parallel to a wrench engagement surface region of the other wrench engagement surface formation (36 or 30; 136 or 130) of the wrench engagement surface formations (30, 36; 130, 136) .

9. Rotatable machining tool (10; 110) according to Claim 8, **characterized in that** parallel wrench engagement surface regions (32/40, 34/38; 132/134, 138/140) of different wrench engagement surface formations (30, 36; 130, 136) of the wrench engagement surface formations (30, 36; 130, 136) are situated in circumferential regions of the machining tool (10; 110) that are situated diametrically opposite to one another.

10. Rotatable machining tool (10; 110) according to one of the preceding claims, **characterized in that** the machining tool (10; 110) has exactly two wrench engagement surface formations (30, 36; 130, 136).

11. Rotatable machining tool (10; 110) according to one of the preceding claims, **characterized in that** each of the wrench engagement surface formations (30, 36; 130, 136) has exactly two wrench engagement surface regions (32/34, 38/40; 132/134, 138/140) which are inclined relative to one another.

## Revendications

1. Outil de coupe rotatif (110) qui s'étend le long d'un axe d'outil (W) définissant une direction axiale, l'outil de coupe (110) présentant, dans une première région d'extrémité longitudinale axiale (112), une formation de coupe (113) qui est réalisée pour enlever de la matière sur une pièce, l'outil de coupe (110) présentant, dans une deuxième région d'extrémité longitudinale axiale (118) opposée à la première, une formation de connexion par vissage (120) qui est réalisée pour la connexion par vissage à un composant d'accouplement (24), et l'outil de coupe (110) présentant des formations de surfaces d'engagement de clé (130, 136) diamétralement opposées l'une à l'autre par rapport à l'axe d'outil (W), qui sont réalisées pour un engagement d'appui avec transfert de couple avec des surfaces de clé (58, 60, 62, 64) d'une clé, chacune des formations de surfaces d'engagement de clé (130, 136) présentant deux régions de surfaces d'engagement de clé (132/134, 138/140) prévues à distance l'une de l'autre, adjacentes dans la direction périphérique autour de l'axe d'outil (W), qui sont inclinées à l'écart l'une de l'autre de telle sorte qu'elles forment un sommet (S) saillant à l'écart de l'axe d'outil (W), une région de surface intermédiaire étant prévue entre les régions de surfaces d'engagement de clé (138/140) inclinées l'une par rapport à l'autre, de telle sorte que le sommet (S) soit aplati,
**caractérisé en ce que** l'angle (α) que forment les vecteurs normaux (N132, N134) des régions de surfaces d'engagement de clé (132/134, 138, 140) inclinées l'une par rapport à l'autre, adjacentes dans la direction périphérique, de l'une des formations de surfaces d'engagement de clé (130, 136), est inférieur ou égal à 15°.

2. Outil de coupe rotatif (10) qui s'étend le long d'un axe d'outil (W) définissant une direction axiale, l'outil de coupe (10) présentant, dans une première région d'extrémité longitudinale axiale (12), une formation de coupe (13) qui est réalisée pour enlever de la matière sur une pièce, l'outil de coupe (10) présentant, dans une deuxième région d'extrémité longitudinale axiale (18) opposée à la première, une formation de connexion par vissage (20) qui est réalisée pour la connexion par vissage à un composant d'accouplement (24), et l'outil de coupe (10) présentant des formations de surfaces d'engagement de clé (30, 36) diamétralement opposées l'une à l'autre par rapport à l'axe d'outil (W), qui sont réalisées pour un engagement d'appui avec transfert de couple avec des surfaces de clé (58, 60, 62, 64) d'une clé, chacune des formations de surfaces d'engagement de clé (30, 36) présentant deux régions de surfaces d'engagement de clé (32/34, 38/40) prévues de manière directement adjacente l'une à l'autre, adjacentes dans la direction périphérique autour de l'axe d'outil (W), qui sont inclinées à l'écart l'une de l'autre de telle sorte qu'elles forment un sommet pointu (S) saillant à l'écart de l'axe d'outil (W),
**caractérisé en ce que** l'angle (a) que forment les vecteurs normaux (N38, N40) des régions de surfaces d'engagement de clé (32/34, 38/40) inclinées l'une par rapport à l'autre, immédiatement adjacentes dans la direction périphérique, de l'une des formations de surfaces d'engagement de clé (30, 36), est inférieur ou égal à 15°.

3. Outil de coupe rotatif (10 ; 110) selon la revendication 1 ou la revendication 2,
**caractérisé en ce qu'**un axe d'inclinaison (N) autour duquel les deux régions de surfaces d'engagement de clé (32/34, 38/40 ; 132/134, 138/140), adjacentes ou directement adjacentes dans la direction périphérique autour de l'axe d'outil (W), d'au moins l'une des formations de surfaces d'engagement de clé (30, 36 ; 130, 136) sont inclinées l'une par rapport à l'autre, est parallèle à l'axe d'outil (W).

4. Outil de coupe rotatif (10 ; 110) selon l'une quelconque des revendications 1 à 3,
**caractérisé en ce qu'**au moins une région de surface d'engagement de clé (32, 34, 38, 40 ; 132, 134, 138, 140), de préférence toutes les régions de surfaces d'engagement de clé (32, 34, 38, 40 ; 132, 134, 138, 140), d'au moins l'une des formations de surfaces d'engagement de clé (30, 36 ; 130, 136), de préférence des deux formations de surfaces d'engagement de clé (30, 36 ; 130, 136), est ou sont plane(s).

5. Outil de coupe rotatif (10 ; 110) selon la revendication 4,
**caractérisé en ce que** l'au moins une région de surface d'engagement de clé plane (32, 34, 38, 40 ; 132, 134, 138, 140), de préférence toutes les régions de surfaces d'engagement de clé planes (32, 34, 38, 40 ; 132, 134, 138, 140), est ou sont orientée(s) parallèlement à l'axe d'outil (W).

6. Outil de coupe rotatif (10 ; 110) selon l'une quelconque des revendications précédentes, **caractérisé en ce que** l'angle (a) que forment les vecteurs normaux (N38, N40 ; N132, N134) des régions de surfaces d'engagement de clé (32/34, 38/40) inclinées l'une par rapport à l'autre, adjacentes ou immédiatement adjacentes dans la direction périphérique, de l'une des formations de surfaces d'engagement de clé (30, 36), est inférieur ou égal à 10°, de préférence inférieur ou égal à 7,5°, plus préférablement inférieur ou égal à 5°.

7. Outil de coupe rotatif (10 ; 110) selon l'une quelconque des revendications précédentes, **caractérisé en ce que** l'outil de coupe (10 ; 110) présente deux formations de surfaces d'engagement de clé (30, 36 ; 130, 136) qui présentent une symétrie spéculaire par rapport à un plan de symétrie (SE) contenant l'axe d'outil (W) et/ou qui présentent une symétrie de révolution par rapport à l'axe d'outil (W) en tant qu'axe de symétrie.

8. Outil de coupe rotatif (10 ; 110) selon l'une quelconque des revendications précédentes, **caractérisé en ce qu'**au moins l'une des régions de surfaces d'engagement de clé (32, 34, 38, 40 ; 132, 134, 138, 140) d'une formation de surface d'engagement de clé (30 ou 36 ; 130 ou 136) des formations de surfaces d'engagement de clé (30, 36 ; 130, 136) est parallèle à l'une des régions de surfaces d'engagement de clé (32, 34, 38, 40 ; 132, 134, 138, 140) de l'autre formation de surface d'engagement de clé (36 ou 30 ; 136 ou 130) des formations de surfaces d'engagement de clé (30, 36 ; 130, 136), de préférence chaque région de surface d'engagement de clé (32, 34, 38, 40 ; 132, 134, 138, 140) d'une formation de surface d'engagement de clé (30 ou 36 ; 130 ou 136) des formations de surfaces d'engagement de clé (30, 36 ; 130, 136) est parallèle à une région de surface d'engagement de clé de l'autre formation de surface d'engagement de clé (36 ou 30 ; 136 ou 130) des formations de surfaces d'engagement de clé (30, 36 ; 130, 136).

9. Outil de coupe rotatif (10 ; 110) selon la revendication 8,
**caractérisé en ce que** des régions de surfaces d'engagement de clé parallèles l'une à l'autre (32/40, 34/38 ; 132/134, 138/140) de différentes formations de surfaces d'engagement de clé (30, 36 ; 130, 136) des formations de surfaces d'engagement de clé (30, 36 ; 130, 136) sont situées dans des régions périphériques diamétralement opposées de l'outil de coupe (10 ; 110) .

10. Outil de coupe rotatif (10 ; 110) selon l'une quelconque des revendications précédentes, **caractérisé en ce que** l'outil de coupe (10 ; 110) présente exactement deux formations de surfaces d'engagement de clé (30, 36 ; 130, 136).

11. Outil de coupe rotatif (10 ; 110) selon l'une quelconque des revendications précédentes,
**caractérisé en ce que** chacune des formations de surfaces d'engagement de clé (30, 36 ; 130, 136) présente exactement deux régions de surfaces d'engagement de clé (32/34, 38/40 ; 132/134, 138/140) inclinées l'une par rapport à l'autre.
